# EUROPEAN PATENT APPLICATION

(11) **EP 4 147 948 A1**
(43) Date of publication of application: **15.03.2023**
(21) Application number: 22186184.2
(22) Date of filing: 21.07.2022
(51) Int. Cl.: B62D 7/18

(54) **AXLE WITH STEERING HINGE FOR STEERING WHEELS OF A TRAILER**

(30) Priority: 08.09.2021 IT 202100023159
(71) Applicant: R.P.F. S.p.A., 21040 Uboldo (Varese) (IT)
(72) Inventor: RADRIZZANI, Flavio, 21040 Uboldo (Varese) (IT)
(74) Representative: Rapisardi, Mariacristina

(57) **Abstract**

A steering axle (1) for the trailer of a vehicle, comprising, at each end a bracket (2) rigidly fixed to the axle (1), a support (3) for the hub (4) of at least one wheel, and a steering hinge (C) connecting the support (3) to the bracket (2), wherein the steering hinge (C) comprises a pin (5) and a housing for the pin (5) that comprises a central housing portion (6), an upper housing portion (7A) and a lower housing portion (7B), upper sliding bearings (9) and lower sliding bearings (10) respectively interposed between the upper housing portion (7A) and the pin (5) and between the lower housing portion (7B) and the pin (5), wherein threaded connecting means is comprised between the pin (5) and the central housing portion (6).

## Description

The present invention refers to an axle with a steering hinge for steering wheels for a trailer of a vehicle.

Axles have been available on the market for some time for a trailer of a vehicle with steering wheels.

It is known that wheels can be steered by an actuating control, typically a hydraulic cylinder, or be self-steering, in which case steering is induced by the wheel/road contact.

As is known, the connection between the wheel and the axle passes through a steering hinge, a support for the hinge of a wheel being constrained on one element of the hinge, and on the other element, typically a bracket, the axle is rigidly constrained, in which the two elements are reciprocally constrained in rotation.

Traditionally, the constraint by rotation is provided by a pin, which is fixed relative to the bracket constraining on the axle, on which the support for the hub of the wheel is constrained but is free to rotate.

Traditionally, the steering hinge is assembled industrially by inserting the pin into the assembled assembly of the bracket and the support of the hub, and with the forced coupling of the pin in the bracket, which is obtained with suitable geometries, also conical geometries, and precise mechanical tolerances; a reliable and durable forced coupling accordingly involves opposing thermal interventions for heating the bracket and cooling the pin to ensure the transit of the pin into the bracket and locking thereof at subsequently standardized ambient temperatures, or alternatively subsequent injections of suitable gluing resins.

Steering hinges that are thus made traditionally entail as is well known difficulties of dismantling for maintenance and/or servicing, because they require specific heat treatments that are onerous and complex and that are dedicated to the entirety of the assembled hinge.

Traditionally, one end of the hinge protrudes from the support of the hub and is suitably threaded to receive a ring nut that fixes axially the support of the hub relative to the bracket.

A plurality of sliding accessories suitably selected and arranged on the pin maintains the support of the hub in the correct axial position relative to the pin and limits friction in reciprocal rotation between the two elements.

The overall dimensions of the threaded ring nut on the aforesaid end of the pin that protrudes from the support of the hub are today penalizing in relation to the reading sensors of the condition and position of the steering, which are typically located there and of ever greater significance for the various levels of automatic guide.

The overall dimensions of the ring nut can also complicate fitting of wheels by interference with the rims.

The need is accordingly felt to improve the structure of the steering hinges for a steering axle for trailers of known type.

The technical task of the present invention is thus to provide a steering hinge for a steering axle for trailers which allows the aforementioned technical drawbacks of the prior art to be eliminated. Within the context of this technical task an object of the invention is to realise a steering hinge for a steering axle for trailers the components of which are simple to assemble and dismantle.

A further aim of the invention is to realise a steering hinge for a steering axle for trailers that has reduced overall axial dimensions.

Not the least important aim of the invention is to realise a steering hinge for a steering axle for trailers that has self-straightening characteristics in the absence of transverse loads on the wheel. The technical task, as well as these and other purposes, according to the present invention are achieved by realising a rigid steering axle for the trailer of a vehicle, comprising, at each end of the axle, a bracket rigidly fixed to said axle, a support for the hub of at least one wheel, and a steering hinge connecting said support to said bracket, said steering hinge comprising a pin and a housing for said pin, said housing comprising a central housing portion, an upper housing portion and a lower housing portion, respectively upper and lower bearings interposed between said upper housing portion and said pin and respectively between said lower housing portion and said pin, characterized in that it comprises threaded connecting means between said pin and said central housing portion.

It must be noted that there are two possible solutions; said central housing portion is solidly constrained to the bracket, and said upper housing portion and said lower housing portion are solidly constrained to the support; or said central housing portion is solidly constrained to said support, and said upper housing portion and said lower housing portion are solidly constrained to said bracket.

In practice, either the bracket or the support can have a fork configuration on the arms of which said upper housing portion and said lower housing portion are defined.

In one embodiment, the threaded connecting means comprises a thread and a counter thread that are reciprocally engaged that are provided at conjugate cylindrical surfaces of respectively the pin and the central housing portion.

In one embodiment, the pin has a conical surface abutting against a conjugate conical surface provided in the central housing portion.

In one embodiment, the upper housing portion and the lower housing portion each have an inner cylindrical surface coupled respectively, by the upper sliding bearing and the lower sliding bearing, with a corresponding outer upper cylindrical surface and outer lower cylindrical surface of the pin.

In one embodiment, the thread of the pin is located between the outer lower cylindrical surface and the conical surface of the pin.

In one embodiment, the thread of the pin is located between the outer upper cylindrical surface and the conical surface of the pin.

In one embodiment, anti-unscrewing means of the threaded connecting means is provided.

In one embodiment, between said bracket and said support means is provided for automatic realignment of the wheels for a rectilinear travel set-up, comprising a fixed cam and a movable cam interacting with the fixed cam to rotate around the vertical axis Z of the pin between a stable position of equilibrium associated with a condition of wheels in a rectilinear travel set-up and a position of unstable equilibrium associated with a condition of steered wheels.

Other features of the present invention are further defined in the following claims.

Further characteristics and advantages of the invention will more fully emerge from the description of a preferred but not exclusive embodiment of a steering hinge for a steering axle for trailers according to the invention, illustrated by way of non-limiting example in the accompanying drawings, in which:

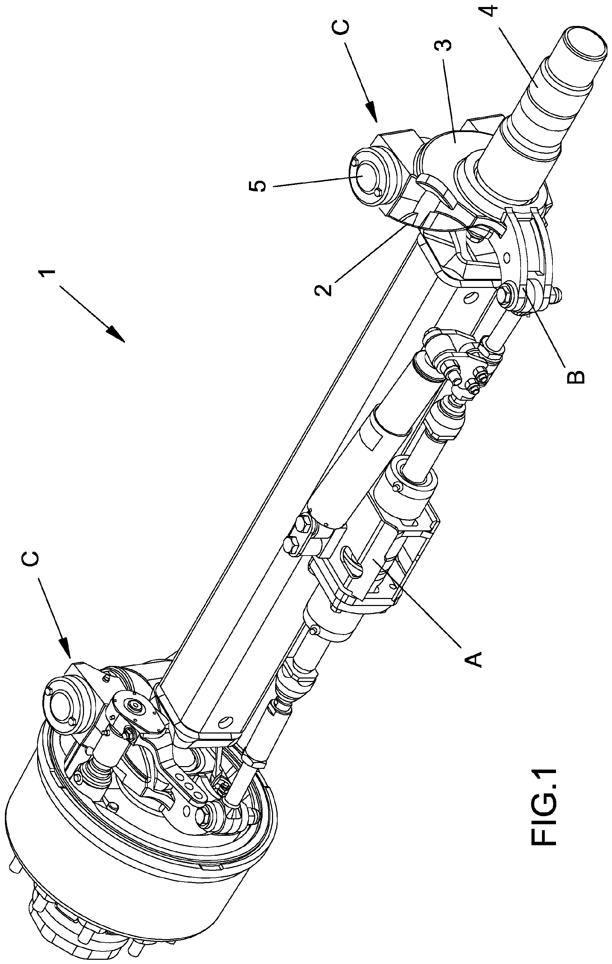

figure 1 shows an assembly view of a steering axle for a trailer;

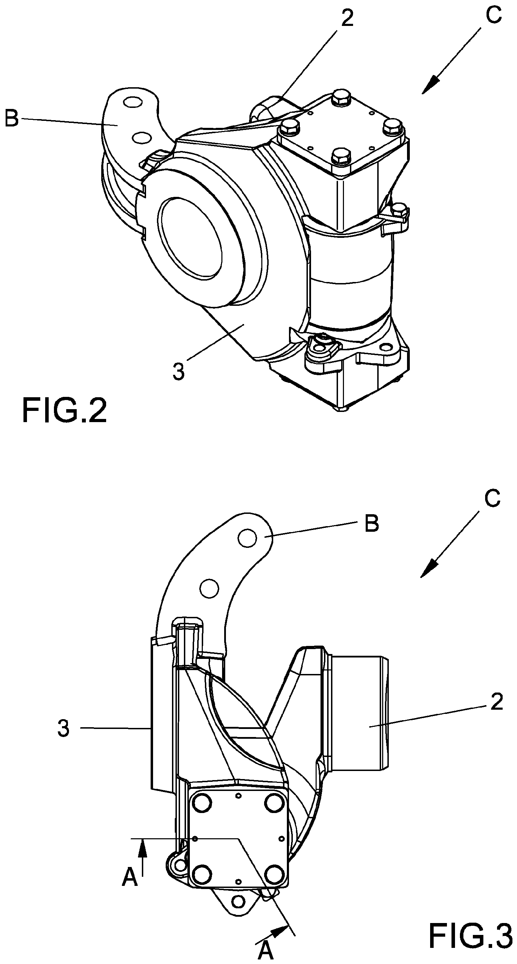

figure 2 shows a perspective view of a steering hinge;
figure 3 shows a plan view of a steering hinge;
figure 4 shows a section AA of a steering hinge in a first embodiment;
figure 5 shows an exploded view of the components of a steering hinge in a first embodiment;
figure 6 shows a section AA of a steering hinge in a second embodiment;
figure 7 shows an exploded view of the components of a steering hinge in a second embodiment. With reference to the cited figures, a steering hinge for a trailer of a vehicle is shown that is denoted in its entirety by reference number 1.

The steering axle 1 comprises at the two ends a steering hinge C that, by a rotation pin 5 arranged in a housing 6, 7a, 7B, connects a bracket 2 that is rigidly fixed to the axle 1 to an oscillating support 3 for the hub 4 of at least one wheel.

The housing of the pin 5 comprises a central housing portion 6 in which the pin 5 is fixed, an upper housing portion 7A above the central housing portion 6 and a lower housing portion 7B below the central housing portion 6.

In the case shown, the central housing portion 6 is fixed to the bracket 2, whereas the upper housing portion 7A and the lower housing portion 7B are fixed to the support 3.

Alternatively, in a case that is not shown, the central housing portion 6 is fixed to the support 3, whereas the upper housing portion 7A and the lower housing portion 7B are fixed to the bracket 2.

If steering of the wheels is controlled, the axle 1 has an actuator A, typically a suitably controlled hydraulic piston, which, connected to the arm B of the support activates and controls the rotation thereof around the pin 5 and thus steering of the wheel/s.

If the axle 1 has self-steering wheels, the actuator A is present but different, with a function of locking the rectilinear travel condition; the steering, and thus the rotation of the support 3 of the hub 4 of a wheel around the pin 5 of the hinge C is induced directly by the contact and by the friction of the wheel with the road.

Advantageously and innovatively according to the present invention, the locking of the pin 5 with the central housing portion 6 comprises threaded connecting means between the pin 5 and the central portion 6.

This threaded connecting means comprises a thread 11 and respectively a counter thread 12 that are reciprocally engaged provided at conjugate cylindrical surfaces of respectively of the pin 5 and of the central housing portion 6.

Opportunely, the pin 5 has at a lower end thereof axial gripping means 20 for a screwing tool arranged in an eccentric position.

Opportunely and advantageously, the pin 5 has a conical surface 13 abutting on a conjugate conical surface 14 provided in the central housing portion 6 in the bracket 2: when the threaded connecting means is tightened, the conical surface 13 of the pin 5 engages against the conjugate surface 14 of the bracket 2, actuating further locking by interference of the pin 5 with the bracket 2. According to the present invention, anti-unscrewing means is further provided for the threaded connecting means that can adopt a variety of constructions.

Merely by way of non-limiting example, anti-unscrewing means is shown comprising a special washer 15 A that engages an axial groove 16 of the pin 5 and is then suitably locked by the insert 15B and by the pin 15C on the bracket 2.

The upper housing portion 7A and the lower housing portion 7B of the hinge C in the support 3 have respectively an inner upper cylindrical surface 21 and an inner lower cylindrical surface 22. The inner upper cylindrical surface 21 houses friction reducing means, typically an upper sliding bearing 9 with which an outer upper cylindrical surface 23 of the pin 5 is coupled.

Similarly, the inner lower cylindrical surface 22 houses a lower sliding bearing 10 with which an outer lower cylindrical surface 24 of the pin 5 is coupled.

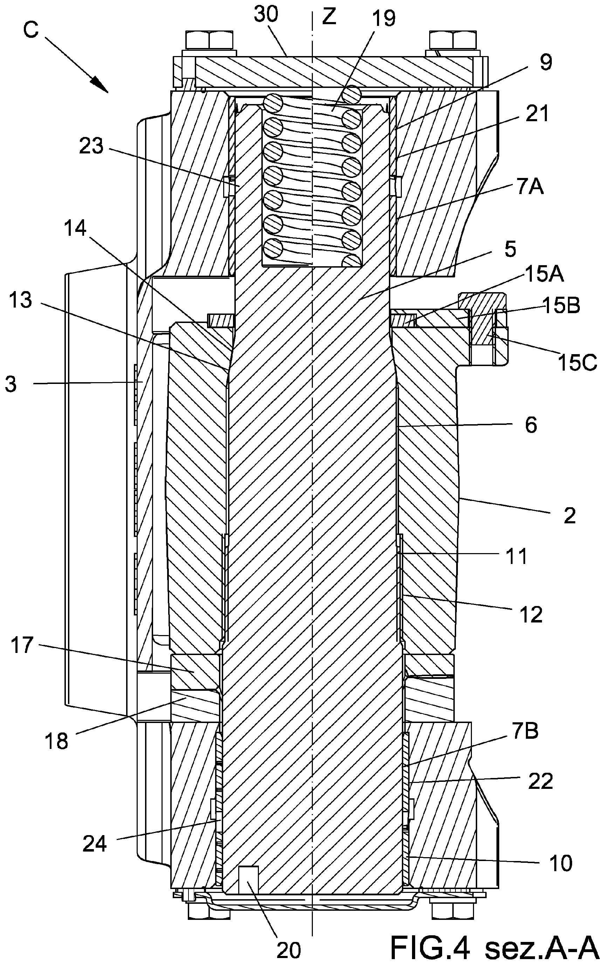

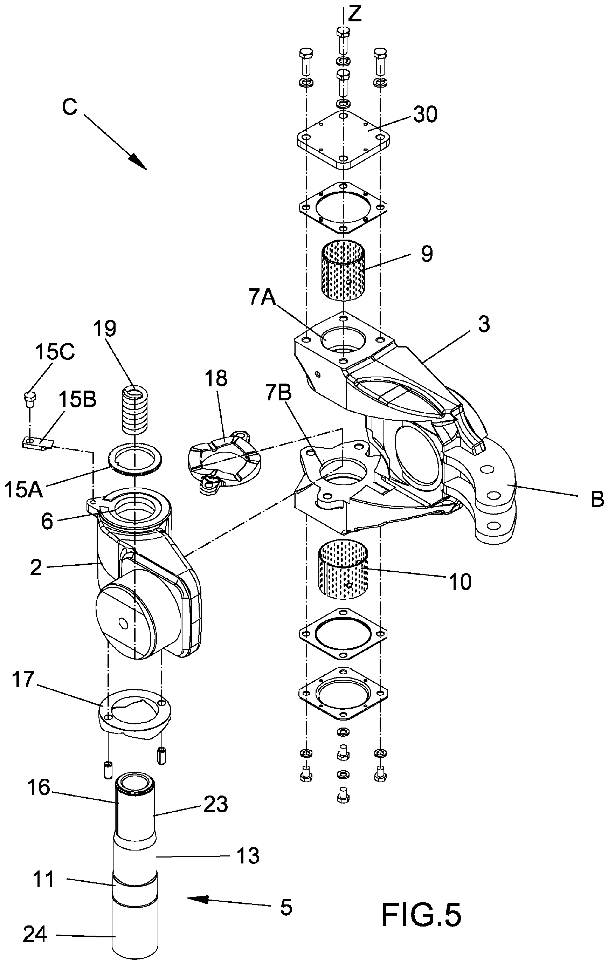

In a first preferred embodiment, as shown in figures 4 and 5, the thread 11 of the pin 5 is located between the outer lower cylindrical surface 24 and the conical surface 13 of the pin 5.

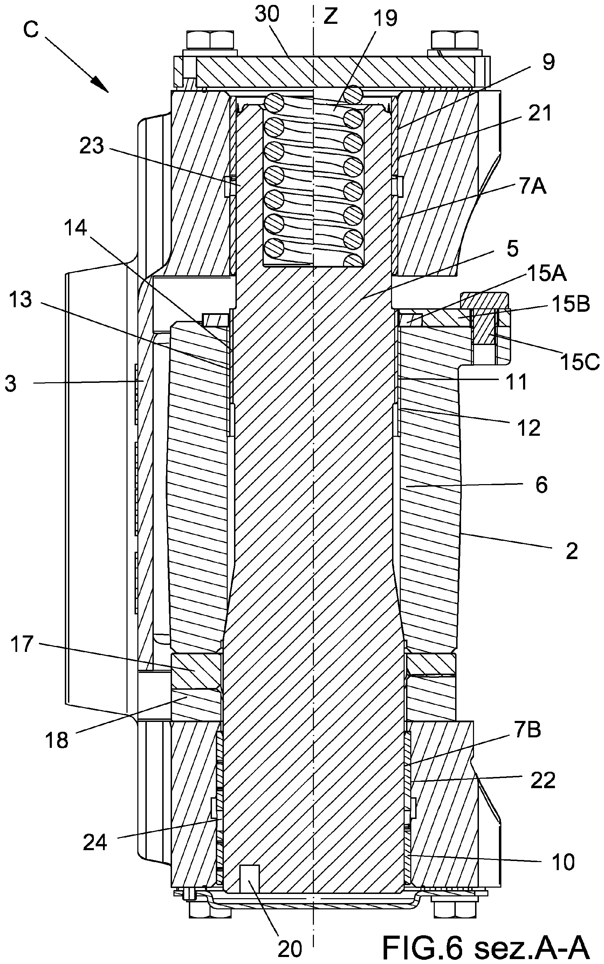

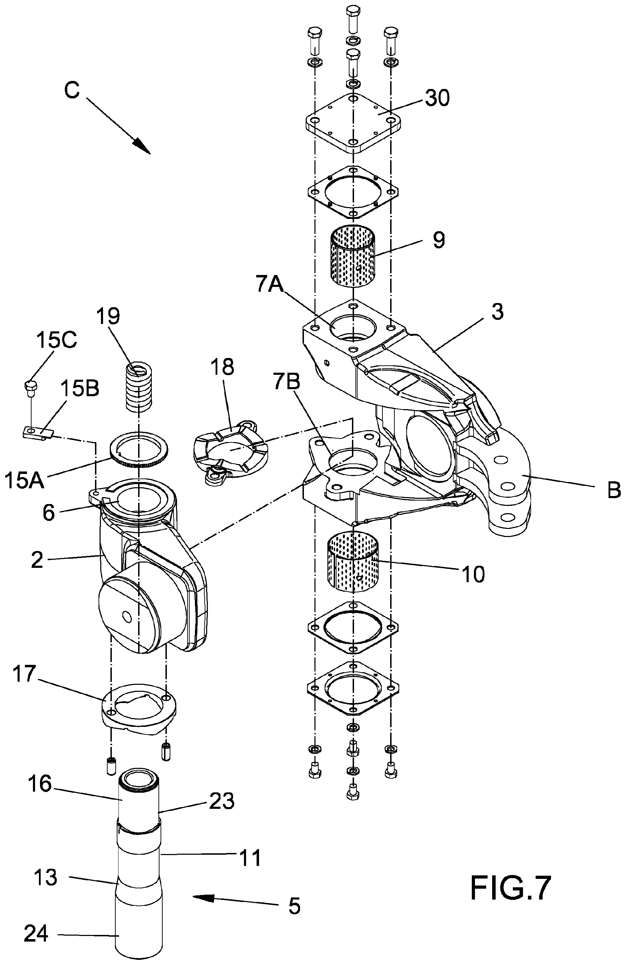

In a second preferred embodiment, as shown in figures 6 and 7, the thread 11 of the pin 5 is located between the outer upper cylindrical surface 23 and the conical surface 13 of the pin 5. Advantageously, according to the present invention, means is provided for automatic realignment of the wheels for rectilinear travel, i.e. realignment of the set steering angle.

This means for automatic realignment comprises a fixed cam 17 and a movable cam 18 typically having tilted circular and respectively conjugate sectors.

The movable cam 18 interacts with the fixed cam 17 to rotate around the vertical axis Z of the pin 5 between a position of stable equilibrium associated with a condition of wheels in a rectilinear travel set-up and a position of unstable equilibrium associated with a condition of steered wheels. The means for automatic realignment comprises a coil spring 19 axially interposed between an end of the pin 5 and a constraining element 30 removably connected either to the upper housing portion 7A or the lower housing portion 7B.

In the case shown, only by way of example, the coil spring 19 is axially interposed along the axis Z between an upper end of the pin 5 and the upper constraining element 30 removably connected to the upper housing portion 7A in the support 3.

Advantageously, the upper constraining element 30 is provided flush with the upper housing portion 7A, and thus with the support 3, not entailing substantial vertical encumbrances beyond the support 3 itself.

The operation of the steering hinge for a steering axle for the trailer of a vehicle according to the invention is clear from what is disclosed and illustrated and, in particular, is substantially as follows.

The bracket 2 and the support 3 are placed freely next to one another, the central portion 6, the upper housing portion 7 A and the lower housing portion 7B are aligned along the axis Z, the sliding bearings 8 and 9 inserted respectively into the upper housing portion 7 A and into the lower housing portion 7B, the cotter pin 15 positioned above the bracket 2, the fixed cam 17 and the movable cam 18 positioned below the bracket 2.

The pin 5 is then inserted along the axis Z from the lower housing portion 7B until it engages the thread 11 with the counter thread 12; through the axial holes 20, gripping means for a screwing tool tighten the pin 5 in the central portion 6 in the bracket 2.

The suitable reciprocal machining tolerances enable the pin 5 to be rotated in the screwing step until the pin 5 comes to abut on the conical surface 13 of the pin 5 with the conjugate conical surface 14 of the central portion 6.

Owing to the anti-unscrewing means, the pin 5 thus remains locked with respect to the bracket 2 in the central housing portion 6.

With opposite operations, the pin 5 is freed from the bracket 2 and the support 3 can be favourably separated from the bracket 2.

The support 3 of the hub 4 of the wheel is constrained but free to rotate around the pin 5 in the upper housing portion 7A and in the lower housing portion 7B, in which the respectively upper 9 and lower 10 sliding bearings are advantageously housed.

The elastic engagement of the coil spring 19 against the upper constraining element 30 connected to the upper housing portion 7A in the support 3 maintains the fixed cam 17 adhering substantially solidly constrained on the bracket 2 and the movable cam 18 substantially solidly constrained on the support 3 of the hub 4.

In a condition of vertical non-adhesion of the wheel to the road, this elastic engagement counteracts only the weight of the wheel on the hub 4, which would tend to move the movable cam 18 away from the fixed cam 17- and facilitates the rotation around the axis Z of the support 3 to a position of equilibrium associated with the condition of the wheels in the rectilinear travel set-up.

The positioning and conformation of the upper element 30 allow positioning above the steering hinge C of known accessories for reading the steering conditions that are not described in the figures, keeping the overall dimensions of the thus configured axle 1 limited.

It has been in practice found that a steering hinge for a steering axle for the trailer of a vehicle according to the invention is particularly advantageous because of constructional, assembly and dismantling simplicity.

A further advantage of the invention is to realise a steering hinge for a steering axle for trailers that has reduced overall axial dimensions that enable known steering monitoring accessories to be mounted.

Not the least important advantage of the invention is to realise a steering hinge for a steering axle for trailers that has self-straightening characteristics in the absence of transverse loads on the wheel.

A steering hinge for a steering axle for trailers as conceived herein is susceptible of many modifications and variants, all falling within the scope of the inventive concept as defined by the claims; furthermore, all the details are replaceable by technically equivalent elements.

In practice, the materials used, as well as the dimensions, can be any according to the needs and the state of the art.

## Claims

1. A steering axle (1) for the trailer of a vehicle, comprising, at each end of said axle (1), a bracket (2) rigidly fixed to said axle (1), a support (3) for the hub (4) of at least one wheel, and a steering hinge (C) connecting said support (3) to said bracket (2), said steering hinge (C) comprising a pin (5) and a housing for said pin (5), said housing comprising a central housing portion (6), an upper housing portion (7A) and a lower housing portion (7B), upper sliding bearings (9) and lower sliding bearings (10) respectively interposed between said upper housing portion (7A) and said pin (5), and between said lower housing portion (7B) and said pin (5), **characterized in that** it comprises threaded connecting means between said pin (5) and said central housing portion (6).

2. The steering axle (1) for the trailer of a vehicle according to claim 1, **characterized in that** said central housing portion (6) is fixed to said bracket (2), whereas said upper housing upper portion (7A) and said lower housing lower portion (7B) are fixed to said support (3), or vice versa, said central housing portion (6) is fixed to said support (3), whereas said upper housing upper portion (7A) and said lower housing lower portion (7B) are fixed to said bracket (2).

3. The steering axle (1) for a trailer of a vehicle according to any preceding claim, **characterized in that** said threaded connecting means comprises a thread (11) and respectively a counter thread (12) that are reciprocally engaged provided at conjugate cylindrical surfaces of said pin (5) and respectively of said central housing portion (6).

4. The steering axle (1) for a trailer of a vehicle according to any preceding claim, **characterized in that** said pin (5) has a conical surface (13) abutting against a conjugate conical surface (14) provided in said central housing portion (6).

5. The steering axle (1) for the trailer of a vehicle according to the preceding claim, **characterized in that** said upper housing portion (7A) and respectively said lower housing portion (7B) have respectively an inner upper cylindrical surface (21) and an inner lower cylindrical surface (22) coupled respectively by means of said upper sliding bearing (9) and said lower sliding bearing (10) respectively to an outer upper cylindrical surface (23) and to a lower cylindrical surface (24) of said pin (5), and said thread (11) of said pin (5) is located between said outer upper cylindrical surface (23) of said pin (5) and said conical surface (13) of said pin (5).

6. The steering axle (1) for the trailer of a vehicle according to claim 3, **characterized in that** said upper housing portion (7A) and respectively said lower housing portion (7B) have respectively an inner upper cylindrical surface (21) and an inner lower cylindrical surface (22) coupled respectively by means of said upper sliding bearing (9) and said lower sliding bearing (10) respectively to an outer upper cylindrical surface (23) and to a lower cylindrical surface (24) of said pin (5), and said thread (11) of said pin (5) is located between said outer lower cylindrical surface (24) of said pin (5) and said conical surface (13) of said pin (5).

7. The steering axle (1) for a trailer of a vehicle according to any preceding claim, **characterized in that** screw locking means for said threaded connecting means is provided.

8. The steering axle (1) for a trailer of a vehicle according to any preceding claim, **characterized in that** means is provided for automatic realignment of the wheels for rectilinear travel, comprising a fixed cam (17) and a movable chamber (18) interacting with said fixed cam (17) to rotate around the vertical axis Z of direction of said pin (5) between a stable position of equilibrium associated with a condition of wheels in a rectilinear travel set-up and a position of unstable equilibrium associated with a condition of steered wheels.

9. The steering axle (1) for the trailer of a vehicle according to the preceding claim, **characterized in that** it comprises a coil spring (19) axially interposed between one end of said pin (5) and a constraining element (30) removably connected to one of said upper housing portion (7A) and lower housing portion (7B).

10. The steering axle (1) for a trailer of a vehicle according to any preceding claim, **characterized in that** said pin (5) has at one lower end axial gripping holes (20) for a screwing tool.

11. A steering hinge (C) of a steering axle (1) for the trailer of a vehicle, configured for connection between a bracket (2) adapted to being rigidly fixed to said axle (1) and a support (3) for the hub (4) of at least one wheel, said steering hinge (C) comprising a pin (5) and a housing of said pin (5), said housing comprising a central housing portion (6), an upper housing portion (7A) and a lower housing portion (7B), upper sliding bearings (9) and lower sliding bearings (10) respectively interposed between said upper housing portion (7A) and said pin (5) and between said lower housing portion (7B) and said pin (5), **characterized in that** it comprises threaded connecting means between said pin (5) and said central housing portion (6).
